# EUROPEAN PATENT SPECIFICATION

(11) **EP 2 701 817 B1**
(45) Date of publication and mention of the grant of the patent: **12.09.2018**
(21) Application number: 12777746.4
(22) Date of filing: 23.04.2012
(51) Int. Cl.: A63F 13/213, A63F 13/42

(54) **MANUAL AND CAMERA-BASED GAME CONTROL**
MANUELLE UND KAMERABASIERTE SPIELSTEUERUNG
COMMANDE DE JEU MANUELLE ET À BASE DE CAMÉRA

(30) Priority: 28.04.2011 US 201161480046 P; 29.08.2011 US 201113220609
(43) Date of publication of application: 05.03.2014
(73) Proprietor: Microsoft Technology Licensing, LLC, Redmond, WA 98052 (US)
(72) Inventor: LANSDALE, Thomas William, Redmond, Washington 98052-6399 (US); GRIFFITHS, Charles Robert, Redmond, Washington 98052-6399 (US)
(74) Representative: CMS Cameron McKenna Nabarro Olswang LLP
(86) International application number: PCT/US2012/034677
(87) International publication number: WO 2012/148853

(56) References cited:
- EP-A1- 2 079 004
- WO-A2-2007/038622
- US-A1- 2005 059 488
- US-A1- 2007 060 336
- US-A1- 2009 048 021
- US-A1- 2009 209 343
- US-A1- 2009 221 374
- US-A1- 2010 302 015
- US-B2- 6 890 262

## Description

### BACKGROUND

Existing video and computer game control systems use hand held controllers which incorporate buttons and joysticks to enable a player to control an avatar or other objects depicted at a game display. Design of these types of hand held controllers seeks to enable fine grained control of game play in robust, easy to use and intuitive manners.

More recently, some computer game control systems use voice recognition technology and gesture recognition to enable a player to control a game interface. In this situation gamers have no hand held controller and are able to interact with the game in a straightforward manner without being restricted by physical user input devices such as hand held controllers.

EP2079004 describes tracking movements of a game controller apparatus using inertial sensor data in conjunction with images to determine gestures of the controller apparatus as input for controlling a game.

The embodiments described below are not limited to implementations which solve any or all of the disadvantages of known game control systems

### SUMMARY

The following presents a simplified summary of the disclosure in order to provide a basic understanding to the reader. This summary is not an extensive overview of the disclosure and it does not identify key/critical elements or delineate the scope of the specification. Its sole purpose is to present a selection of concepts disclosed herein in a simplified form as a prelude to the more detailed description that is presented later.

Manual and camera-based game control is described. In one embodiment, a game system receives an image stream depicting a player of a game and also receives manual input from a hand operated controller used by the player. In an example, the manual input may be used to control an avatar and the image stream is used to recognize gestures of the player and control background objects in the game using the recognized gestures. For example, by using gestures such as head rotations the player's hands are free to continue operating a hand-held controller and the player has increased control and an immersive game play experience. In various embodiments, methods for detecting head gestures from image streams in real time are described such as tracking velocity of player's heads and motion through quadrants of an image stream.

Many of the attendant features will be more readily appreciated as the same becomes better understood by reference to the following detailed description considered in connection with the accompanying drawings.

### DESCRIPTION OF THE DRAWINGS

The present description will be better understood from the following detailed description read in light of the accompanying drawings, wherein:
FIG. 1 is a schematic diagram of a player holding a game controller and sitting before a game apparatus having a depth camera;
FIG. 2 is a schematic diagram of a game system incorporating an image capture device, a hand held controller, a computing device and a display;
FIG. 3 is a plan view of a hand held controller;
FIG. 4 is a perspective view of the hand held controller of FIG. 3;
FIG. 5 is a schematic diagram of a display during game play;
FIG. 6 is a flow diagram of a method of operation of a game system;
FIG. 7 is a flow diagram of another method of operation of a game system;
FIG. 8 is a schematic diagram of a head tracking process;
FIG. 9 illustrates an exemplary computing-based device in which embodiments of a game system may be implemented.
Like reference numerals are used to designate like parts in the accompanying drawings.

### DETAILED DESCRIPTION

The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

Although the present examples are described and illustrated herein as being implemented in a game system for two dimensional side-scrolling platformer games, the system described is provided as an example and not a limitation. As those skilled in the art will appreciate, the present examples are suitable for application in a variety of different types of game systems.

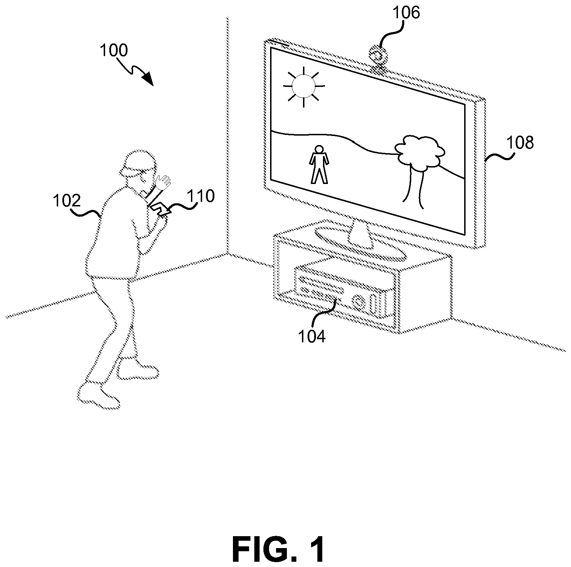

Reference is first made to FIG. 1, which illustrates an example control system 100 for controlling a computer game. In this example, the control system comprises both a hand-held controller and a camera-based control system. By integrating both types of control a game player experiences the benefits of both types of control system. Integration is achieved as described herein to enable fine grained control of game systems in a robust, easy to use manner which enhances the player experience. FIG. 1 shows a user 102 playing, in this illustrative example, a two dimensional side-scrolling platformer game. This type of game is may be clearly depicted in two dimensional drawings; however, the methods described herein are also applicable to three dimensional games, augmented reality applications and games of other types. In some examples, camera-based control system 100 can be used to, among other things, determine body pose, bind, recognize, analyze, track, associate to a human target, provide feedback, and/or adapt to aspects of a human target such as user 102 (also referred to herein as a player). In this example one player is depicted for clarity. However, two or more players may also use the control system at the same time.

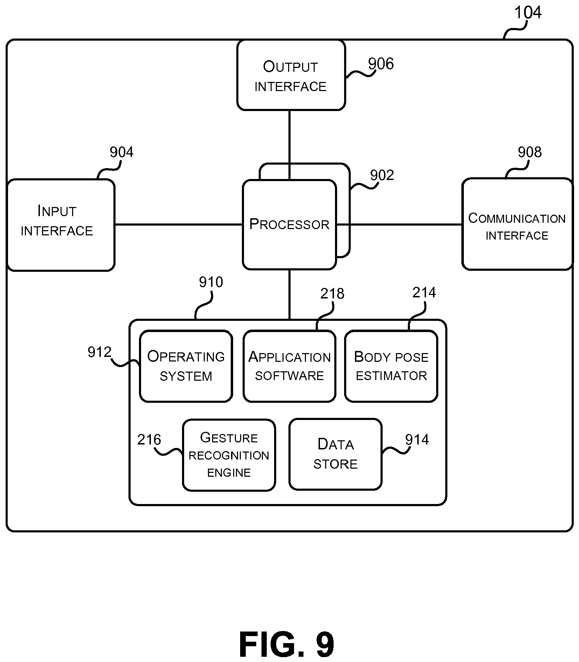

The camera-based control system 100 comprises a computing device 104. The computing device 104 can be a general purpose computer, gaming system or console, or dedicated image processing device. The computing device 104 can include hardware components and/or software components such that the computing device 104 can be used to execute applications such as gaming applications and/or non-gaming applications. The structure of the computing device 104 is discussed hereinafter with reference to FIG. 9.

The camera-based control system 100 further comprises a capture device 106. The capture device 106 can be, for example, an image sensor or detector that can be used to visually monitor one or more users (such as user 102) such that gestures performed by the one or more users can be captured, analyzed, processed, and tracked to perform one or more controls or actions within a game or application, as described in more detail below.

The camera-based control system 100 can further comprise a display device 108 connected to the computing device 104. The computing device can be a television, a monitor, a high-definition television (HDTV), or the like that can provide game or application visuals (and optionally audio) to the user 102.

In operation, the user 102 can be tracked using the capture device 106 such that the position, movements and size of user 102 can be interpreted by the computing device 104 (and/or the capture device 106) as controls that can be used to affect the application being executed by computing device 104. As a result, the user 102 can move his or her body (or parts of his or her body) to control an executed game or application.

In the illustrative example of FIG. 1, the application executing on the computing device 104 is a two dimensional side-scrolling platformer game that the user 102 is playing. In this example, the computing device 104 controls the display device 108 to provide a visual representation of a terrain comprising a landscape, tree, and the sun to the user 102. The computing device 104 also controls the display device 108 to provide a visual representation of a user avatar that the user 102 can control with his or her movements and/or by using a hand held controller 110. For example, the computing device 104 can comprise a body pose estimator that is arranged to recognize and track different body parts of the user, and map these onto the avatar. In this way, the avatar copies the movements of the user 102 such that if the user 102, for example walks in physical space, this causes the user avatar to walk in game space.

However, only copying user movements in game space limits the type and complexity of the interaction between the user and the game. For example, many in-game controls are momentary actions or commands, which may be triggered using button presses in traditional gaming systems. Examples of these include actions such as punch, shoot, change weapon, throw, kick, jump, and/or crouch. Such actions or commands may be controlled by recognizing that the user is performing one of these actions and triggering a corresponding in-game action, rather than merely copying the user's movements. In addition, combinations of user inputs at the hand held controller and user inputs via the camera-based control system may be used to control the game apparatus.

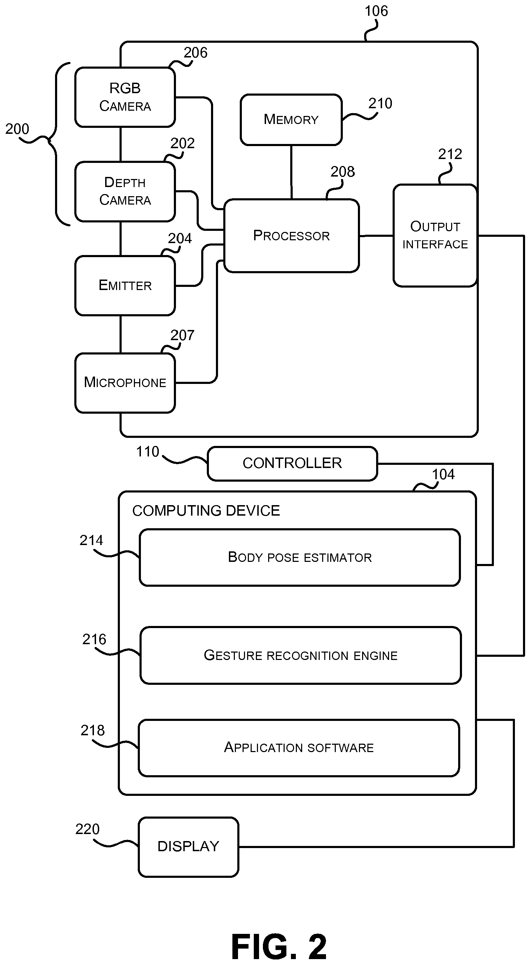

Reference is now made to FIG. 2, which illustrates a schematic diagram of the capture device 106 that can be used in the camera-based control system 100 of FIG. 1. In the example of FIG. 2 the capture device 106 is configured to capture video images with depth information. Such a capture device can be referred to as a depth camera. The depth information can be in the form of a depth image that includes depth values, i.e. a value associated with each image element of the depth image that is related to the distance between the depth camera and an item or object located at that image element. Note that the term "image element" is used to refer to a pixel, group of pixels, voxel, group of voxels or other higher level component of an image.

The depth information can be obtained using any suitable technique including, for example, time-of-flight, structured light, stereo image, or the like. In some examples, the capture device 106 can organize the depth information into "Z layers," or layers that may be perpendicular to a Z-axis extending from the depth camera along its line of sight.

As shown in FIG. 2, the capture device 106 comprises at least one imaging sensor 200. In the example shown in FIG. 2, the imaging sensor 200 comprises a depth camera 202 arranged to capture a depth image of a scene. The captured depth image can include a two-dimensional (2-D) area of the captured scene where each image element in the 2-D area represents a depth value such as a length or distance of an object in the captured scene from the depth camera 202.

The capture device can also include an emitter 204 arranged to illuminate the scene in such a manner that depth information can be ascertained by the depth camera 202. For example, in the case that the depth camera 202 is an infra-red (IR) time-of-flight camera, the emitter 204 emits IR light onto the scene, and the depth camera 202 is arranged to detect backscattered light from the surface of one or more targets and objects in the scene. In some examples, pulsed infrared light can be emitted from the emitter 204 such that the time between an outgoing light pulse and a corresponding incoming light pulse can be detected by the depth camera and measured and used to determine a physical distance from the capture device 106 to a location on the targets or objects in the scene. Additionally, in some examples, the phase of the outgoing light wave from the emitter 204 can be compared to the phase of the incoming light wave at the depth camera 202 to determine a phase shift. The phase shift can then be used to determine a physical distance from the capture device 106 to a location on the targets or objects. In a further example, time-of-flight analysis can be used to indirectly determine a physical distance from the capture device 106 to a location on the targets or objects by analyzing the intensity of the reflected beam of light over time via various techniques including, for example, shuttered light pulse imaging.

In another example, the capture device 106 can use structured light to capture depth information. In such a technique, patterned light (e.g., light displayed as a known pattern such as spot, grid, or stripe pattern, which may also be time-varying) can be projected onto the scene using the emitter 204. Upon striking the surface of one or more targets or objects in the scene, the pattern becomes deformed. Such a deformation of the pattern can be captured by the depth camera 202 and then be analyzed to determine a physical distance from the capture device 106 to a location on the targets or objects in the scene.

In another example, the depth camera 202 can be in the form of two or more physically separated cameras that view a scene from different angles, such that visual stereo data is obtained that can be resolved to generate depth information. In this case the emitter 204 can be used to illuminate the scene or can be omitted.

In some examples, in addition or alterative to the depth camera 202, the capture device 106 can comprise a video camera, which is referred to as an RGB camera 206. The RGB camera 206 is arranged to capture sequences of images of the scene at visible light frequencies, and can hence provide images that can be used to augment the depth images. In some examples, the RGB camera 206 can be used instead of the depth camera 202. The capture device 106 can also optionally comprise a microphone 207 or microphone array (which can be directional and/or steerable), which is arranged to capture sound information such as voice input from the user and can be used for speech recognition.

The capture device 106 shown in FIG. 2 further comprises at least one processor 208, which is in communication with the imaging sensor 200 (i.e. depth camera 202 and RGB camera 206 in the example of FIG. 2), the emitter 204, and the microphone 207. The processor 208 can be a general purpose microprocessor, or a specialized signal/image processor. The processor 208 is arranged to execute instructions to control the imaging sensor 200, emitter 204 and microphone 207 to capture depth images, RGB images, and/or voice signals. The processor 208 can also optionally be arranged to perform processing on these images and signals, as outlined in more detail hereinafter.

The capture device 106 shown in FIG. 2 further includes a memory 210 arranged to store the instructions that for execution by the processor 208, images or frames of images captured by the depth camera 202 or RGB camera 206, or any other suitable information, images, or the like. In some examples, the memory 210 can include random access memory (RAM), read only memory (ROM), cache, Flash memory, a hard disk, or any other suitable storage component. The memory 210 can be a separate component in communication with the processor 208 or integrated into the processor 208.

The capture device 106 also comprises an output interface 212 in communication with the processor 208 and is arranged to provide data to the computing device 104 via a communication link. The communication link can be, for example, a wired connection (such as USB, Firewire, Ethernet or similar) and/or a wireless connection (such as WiFi, Bluetooth or similar). In other examples, the output interface 212 can interface with one or more communication networks (such as the internet) and provide data to the computing device 104 via these networks.

A controller 110 is also provided as part of the capture device. The controller may be a hand held controller as depicted schematically in FIG. 1 or may be integral with another larger device that is not hand held. The controller comprises a plurality of user input devices such as buttons, joysticks, touch pads, switches and enables a player to make input to a game system. User input data is sent from the controller to the computing device 104 by a wired connection and/or a wireless connection.

The computing device 104 executes a number of functions relating to the camera-based gesture recognition, such as an optional body pose estimator 214 and a gesture recognition engine 216. The body pose estimator 214 is arranged to use computer vision techniques to detect and track different body parts of the user. An example of a body pose estimator is given in US patent publication US-2010-0278384-A1 "Human body pose estimation" filed 20 May 2009. The body pose estimator 214 can provide an output to the gesture recognition engine in the form of a time-series of data relating to the user's body pose. This can be in the form of a fully tracked skeletal model of the user, or a more coarse identification of the visible body parts of the user. For example, these time-series sequences can comprise data relating to a time-varying angle between at least two body parts of the user, a rate of change of angle between at least two body parts of the user, a motion velocity for at least one body part of the user, or a combination thereof. The different types of data (angles between certain body parts, velocities, etc.) are known as "features". In other examples, the body pose estimator 214 can derive other data sequences (i.e. other features) from the changing pose of the user over time. In further examples, the gesture recognition engine 216 can utilize input (i.e. features) derived from different sources other than the body pose estimator. Application software 218 can also be executed on the computing device 104 and controlled using the gestures. The application software is arranged to control display of the game at a display 220.

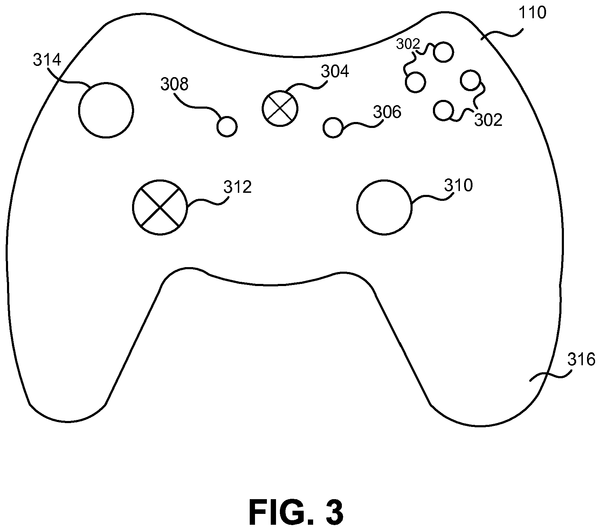

FIG. 3 is a plan view of an example hand held controller 110. It has a generally winged shape with each wing or shoulder 122 being 316 being sized and shaped to be clasped in one hand. The controller comprises a housing supporting a plurality of buttons, switches and joysticks as now described in more detail. However, this is an example only and other types of controller 110 may be used.

Four digital actions buttons 302 are provided on the right face of the controller comprising a green A button, red B button, blue X button and amber Y button. Two analog joysticks 310 and 312 are provided. These joysticks may also be depressed or clicked in to active a digital button beneath each joystick. Digital start 306, back 308 and guide 304 buttons are centrally positioned on the housing. For example, the guide button is used to turn on the controller and access a menu.

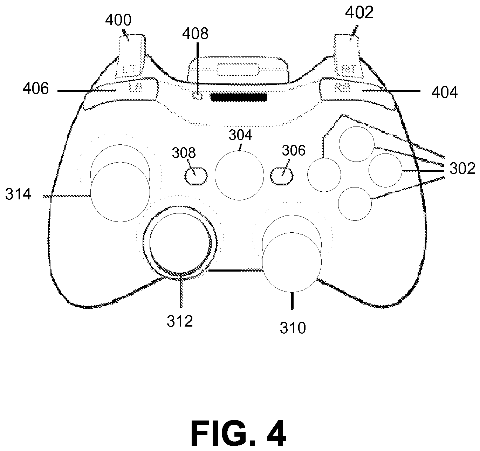

FIG. 4 is a perspective view of the controller and shows a left bumper 406 and a right bumper 404 each of which are buttons that may be pressed by the user. A left trigger 400 and a right trigger 402 which are both analog are given on the underside of the controller (visible in FIG. 4). A connect 408 may be provided to enable wired connection to the computing device 104.

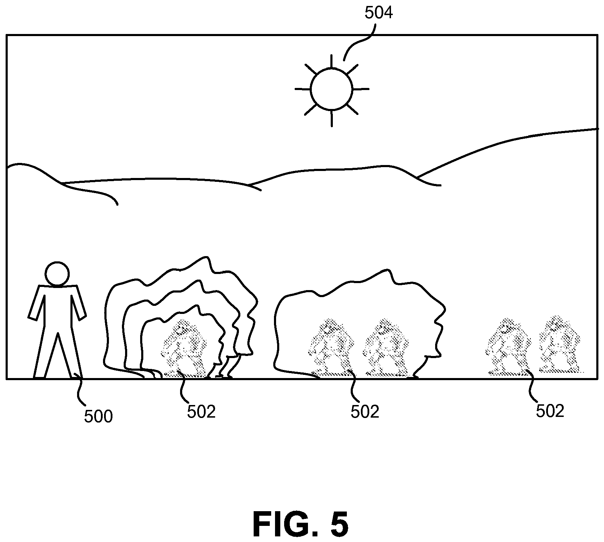

FIG. 5 is a schematic diagram of a display during gameplay for example, at display screen 108. In this example the game is a two dimensional side-scrolling platformer game. A player controls an avatar 500 using a manual controller 110 in order to proceed through an environment which in this example comprises a landscape in daylight due to presence of a sun 504. In this example a plurality of enemies 502 are shown blocking the path of the avatar 500. Around some of these enemies weapons are represented as clouds of danger. The player may advance in the game by avoiding the enemies such as by jumping over them. In this example it is difficult for the player to succeed because of the great number of enemies in the avatar's path.

In addition to controlling the avatar 500 using a manual controller, a player is able to control the game system using the camera-based control system. In the example of FIG. 5 a player may make a particular gesture in order to control the game system. For example, a player may rotate his or her head in order to make the sun 504 set and the enemies 502 sleep. Once the enemies sleep the player may advance the avatar 500 without attack from the enemies.

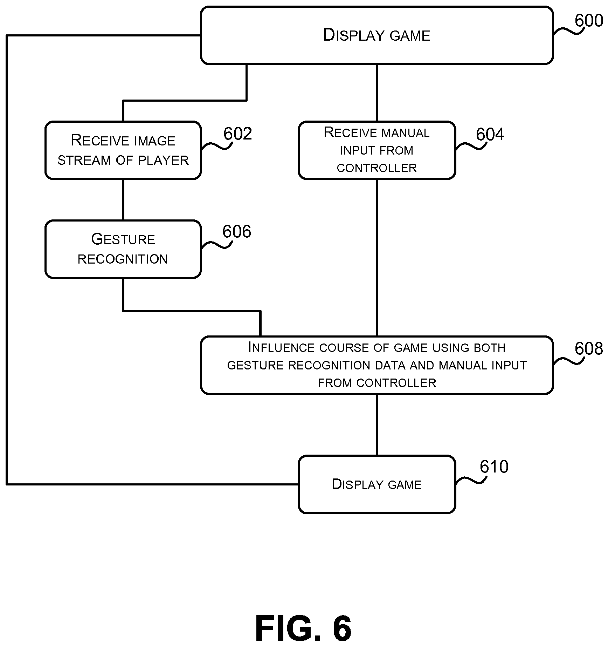

FIG. 6 is a flow diagram of a method of operation of a game system. A game is displayed 600 such as at display screen 108. An image stream is received 602 depicting at least one player of the game. For example, the image stream is obtained from the image capture system 106 and may comprise depth images and color images. Gesture recognition 606 is carried out on the image stream, for example, using body pose estimator 214 and gesture recognition engine 216. The output of the gesture recognition process is used to influence 608 the course of the game. In addition, manual input from a controller 604 is used to influence the course of the game. The game is displayed 610 and the display continues according to rules of the game in combination with the player's manual input, the image stream and other optional factors such as time, random elements, and other factors. By enabling hybrid control of the game system by both manual player input and gesture input the player has increased control of the game system and is immersed in the game experience.

In some examples the camera-based control of the game system is used to control only background objects in the avatar's environment. Background objects are any objects in the game without an associated physics model. For example, the avatar 500 and enemies 502 of FIG. 5 are not background objects but the sun 504 is a background object. In some examples, the camera-based control of the game system is available only at particular states of the game and only using specified gestures. For example, the specified gestures may be gestures which may be performed by a player at the same time as holding a manual controller. A non-exhaustive list of examples of such gestures is: full head rotation, partial head rotation, leg movement, foot movement, knee movement.

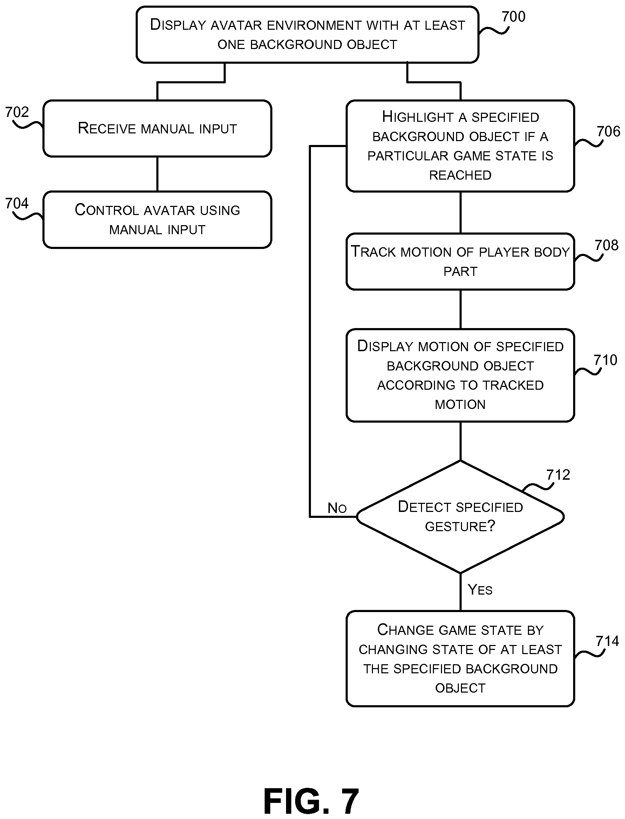

FIG. 7 is a flow diagram of a method of operation of a game system using both manual and gesture-based control. An avatar is displayed in an environment with at least one background object. For example, the background object may be a sun, a tree, a building, a clock. Manual input is received 702 from a player of the game. The manual input is used to control 704 the avatar. A specified background object such as a sun is highlighted if a particular game state is reached 706. The game state may be a scripted movement in the game or may be a state which is activated by the player using a manual input at the controller. To highlight the background object, the sun may change color and/or pulsate. However, this is not essential. Other ways of highlighting the background object may be used. Motion of at least part of the player's body is tracked 708 using the image stream and gesture recognition. Motion of the specified object (such as the sun) is displayed 710 according to the tracked motion of the player's body or body part. For example, the display of the sun in the game moves in a manner matching movement of the player's head. This provides an indication to the player that he or she has control of the background object by moving his or her body or body part. If a specified gesture is detected 712 then the game state is changed 714 by changing the state of at least the specified object. For example, the sun sets and the enemies sleep.

In the examples described above one player operates the game system. However, it is also possible to have a plurality of players playing the game at the same time. In this case the image stream depicts a plurality of players and the players are segmented from the image stream as part of the gesture recognition process. In other examples a plurality of players play the game with each player having his or her own game system with camera-based and manual control. Combinations of these approaches are also possible.

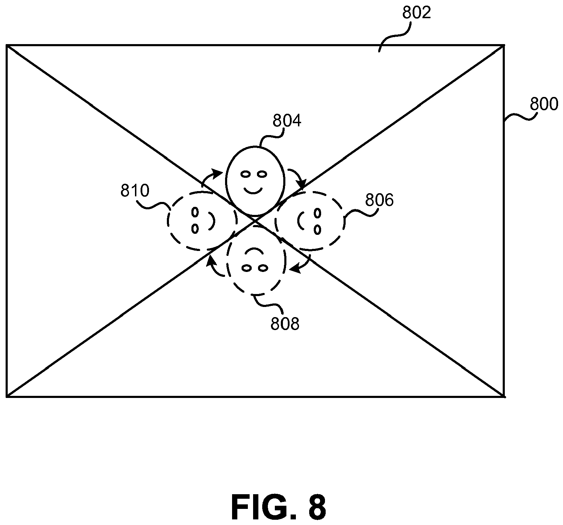

In an example, a head rotation is detected by the gesture recognition system as now described with reference to FIG. 8. The image stream 800 is divided into four quadrants 802 "cut" corner to corner and meeting in the center. The player's head position is typically in the top quadrant and this is illustrated at 804 in FIG. 8. If the player's head moves through each of the quadrants in a clockwise direction and in a specified time, then a particular gesture is detected. This is illustrated in FIG. 8 by the head positions 804, 806, 808 and 810. Other ways of detecting a head movement gesture may be used. For example taking a point in real-world space below the player's head and tracking the player's head position relative to that; or detecting horizontal motion of the player's head and assuming correct vertical motion. In other examples gestures of the head are detected by monitoring velocity of motion of the head in the image stream and comparing that to a threshold.

FIG. 9 illustrates various components of an exemplary computing device 104 which may be implemented as any form of a computing and/or electronic device, and in which embodiments of the above-described game control techniques may be implemented.

Computing device 104 comprises one or more processors 902 which may be microprocessors, controllers or any other suitable type of processors for processing computing executable instructions to control a game system. In some examples, for example where a system on a chip architecture is used, the processors 902 may include one or more fixed function blocks (also referred to as accelerators) which implement a part of the game control methods in hardware (rather than software or firmware).

The computing-based device 104 also comprises an input interface 904 arranged to receive input from one or more devices, such as the capture device 106 of FIG. 2 and/or the controller of FIG. 3 and FIG. 4. An output interface 906 is also provided and arranged to provide output to, for example, a display system integral with or in communication with the computing-based device (such as display device 108 or 220). The display system may provide a graphical user interface, or other user interface of any suitable type although this is not essential. A communication interface 908 may optionally be provided, which can be arranged to communicate with one or more communication networks (e.g. the internet).

The computer executable instructions may be provided using any computer-readable media that is accessible by computing based device 104. Computer-readable media may include, for example, computer storage media such as memory 910 and communications media. Computer storage media, such as memory 910, includes volatile and non-volatile, removable and non-removable media implemented in any method or technology for storage of information such as computer readable instructions, data structures, program modules or other data. Computer storage media includes, but is not limited to, RAM, ROM, EPROM, EEPROM, flash memory or other memory technology, CD-ROM, digital versatile disks (DVD) or other optical storage, magnetic cassettes, magnetic tape, magnetic disk storage or other magnetic storage devices, or any other non-transmission medium that can be used to store information for access by a computing device. In contrast, communication media may embody computer readable instructions, data structures, program modules, or other data in a modulated data signal, such as a carrier wave, or other transport mechanism. As defined herein, computer storage media does not include communication media. Therefore, a computer storage medium should not be interpreted to be a propagating signal per se. Although the computer storage media (memory 910) is shown within the computing-based device 104 it will be appreciated that the storage may be distributed or located remotely and accessed via a network or other communication link (e.g. using communication interface 908).

Platform software comprising an operating system 912 or any other suitable platform software may be provided at the computing-based device to enable application software 218 to be executed on the device. The memory 910 can store executable instructions to implement the functionality of the body pose estimator 214 and the gesture recognition engine 216. The memory 910 can also provide a data store 914, which can be used to provide storage for data used by the processors 902 when performing the game control techniques, such as for any stance templates, thresholds, parameters, screen space mapping functions, or other data.

The term 'computer' is used herein to refer to any device with processing capability such that it can execute instructions. Those skilled in the art will realize that such processing capabilities are incorporated into many different devices and therefore the term 'computer' includes PCs, servers, mobile telephones, personal digital assistants and many other devices.

The methods described herein may be performed by software in machine readable form on a tangible storage medium e.g. in the form of a computer program comprising computer program code means adapted to perform all the steps of any of the methods described herein when the program is run on a computer and where the computer program may be embodied on a computer readable medium. Examples of tangible (or non-transitory) storage media include disks, thumb drives, memory etc and do not include propagated signals. The software can be suitable for execution on a parallel processor or a serial processor such that the method steps may be carried out in any suitable order, or simultaneously.

This acknowledges that software can be a valuable, separately tradable commodity. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

Those skilled in the art will realize that storage devices utilized to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a DSP, programmable logic array, or the like.

## Claims

1. A method of controlling a computer game system comprising:
receiving (602) a stream of images from an image capture device depicting at least one player of a game;
recognizing (606) a gesture of the player by analyzing the stream of images to detect and track body parts of the player;
receiving (604) player manual input from a hand operated controller operated by the player;
displaying a computer game comprising at least two objects at a display being viewed by the at least one player;
controlling (608) the display of one of the objects of the computer game on the basis of the recognized gesture and controlling the display of the other object of the computer game on the basis of the manual input from the controller;
wherein the steps of recognizing the gesture and receiving manual input occur substantially concurrently.

2. A method as claimed in claim 1 wherein displaying the computer game comprises displaying (700) an avatar, as one of the at least two objects, in an environment comprising at least one background object, being the other object, and wherein controlling the display of the computer game comprises using the recognized gesture to control the background object.

3. A method as claimed in any of the preceding claims wherein the controlling the display of the background object is achieved without an associated physics model.

4. A method as claimed in any of the preceding claims comprising storing details of specified gestures for use when recognizing the gesture and wherein the specified gestures may be performed by a player at the same time as making manual input at a hand operated controller.

5. A method as claimed in any of the preceding claims wherein controlling the display of the background object using the recognized gesture is only possible at scripted moments of the game or on manual input from the player.

6. A method as claimed in any of the preceding claims wherein displaying the computer game comprises displaying (700) an avatar as one of the objects in an environment and wherein controlling the display of the computer game comprises controlling (704) the avatar using the manual input from the controller and controlling the other object in the environment using the recognized gesture.

7. A method as claimed in any of the preceding claims wherein recognizing the gesture comprises detecting a head of the player and tracking motion of the head in the image stream.

8. A method as claimed in any of the preceding claims comprising dividing each image of the image stream into four quadrants and recognizing a head rotation when the head is detected in each of the four quadrants in turn.

9. A computer game system comprising:
an image capture device (106) arranged to receive a stream of images depicting at least one player of a game;
a gesture recognition engine (216) arranged to recognizing a gesture of the player by analyzing the stream of images to detect and track body parts of the player;
an input (904) arranged to receive player manual input from a hand operated controller (110) ;
an output (906) arranged to display a computer game comprising at least two objects at a display being viewed by the at least one player;
a processor (902) arranged to control the display of one of the objects of the computer game on the basis of the recognized gesture and controlling the display of the other object of the computer game on the basis of the manual input from the controller;
wherein the steps of recognizing the gesture and receiving manual input occur substantially concurrently.

10. A computer program arranged to perform the steps of any of claims 1 to 8 when run on a computer.

## Patentansprüche

1. Verfahren zum Steuern eines Computerspielsystems umfassend:
Empfangen (602) eines Bildstroms von einer Bilderfassungsvorrichtung, der mindestens einen Spieler eines Spiels darstellt;
Erkennen (606) einer Geste des Spielers, indem der Bildstrom analysiert wird, um Körperteile des Spielers zu erfassen und zu verfolgen;
Empfangen (604) der manuellen Eingabe des Spielers von einer handbetätigten Steuervorrichtung, die vom Spieler bedient wird;
Anzeigen eines Computerspieles umfassend mindestens zwei Objekte auf einer Anzeige, die von dem mindestens einen Spieler betrachtet wird;
Steuern (608) der Anzeige von einem der Objekte des Computerspiels auf der Grundlage der erkannten Geste und Steuern der Anzeige des anderen Objekts des Computerspiels auf der Grundlage der manuellen Eingabe von der Steuervorrichtung; wobei die Schritte des Erkennens der Geste und des Empfangens der manueller Eingabe im Wesentlichen gleichzeitig stattfinden.

2. Verfahren nach Anspruch 1, wobei das Anzeigen des Computerspiels das Anzeigen (700) eines Avatars als eines der mindestens zwei Objekte umfasst, in einer Umgebung umfassend mindestens ein Hintergrundobjekt, das das andere Objekt ist, und wobei das Steuern der Anzeige des Computerspiels die Verwendung der erkannten Geste umfasst, um das Hintergrundobjekt zu steuern.

3. Verfahren nach einem der vorstehenden Ansprüche, wobei das Steuern der Anzeige des Hintergrundobjekts ohne ein zugeordnetes Physik-Modell erreicht wird.

4. Verfahren nach einem der vorstehenden Ansprüche umfassend Speichern von Details von bestimmten Gesten zur Verwendung bei der Erkennung der Geste und wobei die bestimmten Gesten von einem Spieler zur gleichen Zeit wie die manuelle Eingabe an einer handbetätigten Steuervorrichtung ausgeführt werden können.

5. Verfahren nach einem der vorstehenden Ansprüche, wobei das Steuern der Anzeige des Hintergrundobjekts unter Verwendung der erkannten Geste nur in skriptgesteuerten Momenten des Spiels oder auf eine manuelle Eingabe vom Spieler hin möglich ist.

6. Verfahren nach einem der vorstehenden Ansprüche, wobei das Anzeigen des Computerspiels das Anzeigen (700) eines Avatars als eines der Objekte in einer Umgebung umfasst und wobei das Steuern der Anzeige des Computerspiels das Steuern (704) des Avatars unter Verwendung der manuellen Eingabe von der Steuervorrichtung und das Steuern des anderen Objekts in der Umgebung unter Verwendung der erkannten Geste umfasst.

7. Verfahren nach einem der vorstehenden Ansprüche, wobei das Erkennen der Geste das Erfassen eines Kopfes des Spielers und Verfolgen der Bewegung des Kopfes im Bildstrom umfasst.

8. Verfahren nach einem der vorstehenden Ansprüche umfassend Aufteilen jedes Bildes des Bildstroms in vier Quadranten und Erkennen einer Kopfrotation, wenn der Kopf in jedem der vier Quadranten der Reihe nach detektiert wird.

9. Computerspielsystem umfassend:
eine Bilderfassungsvorrichtung (106), die angeordnet ist, um einen Bildstrom zu empfangen, der mindestens einen Spieler eines Spiels darstellt;
ein Gestenerkennungsmodul (216), das angeordnet ist, um eine Geste des Spielers zu erkennen, indem der Bildstrom analysiert wird, um Körperteile des Spielers zu detektieren und zu verfolgen;
eine Eingabe (904), die angeordnet ist, um eine manuelle Eingabe von einer handbetätigten Steuervorrichtung (110) zu empfangen;
eine Ausgabe (906), die angeordnet ist, um ein Computerspiel anzuzeigen, umfassend mindestens zwei Objekte auf einer Anzeige, die von dem mindestens einen Spieler betrachtet wird;
einen Prozessor (902), der angeordnet ist, um die Anzeige vom einem der Objekte des Computerspiels auf der Grundlage der erkannten Geste zu steuern und Steuern der Anzeige des anderen Objekts des Computerspiels auf der Grundlage der manuellen Eingabe von der Steuervorrichtung;
wobei die Schritte des Erkennens der Geste und des Empfangens der manuellen Eingabe im Wesentlichen gleichzeitig stattfinden.

10. Computerprogramm, das angeordnet ist, um die Schritte nach einem der Ansprüche 1 bis 8 auszuführen, wenn es auf einem Computer abläuft.

## Revendications

1. Procédé de commande d'un système de jeu d'ordinateur comprenant:
recevoir (602) un flux d'images à partir d'un dispositif de capture d'images représentant au moins un joueur d'un jeu;
reconnaître (606) un geste du joueur en analysant le flux d'images pour détecter et suivre les parties du corps du joueur ;
recevoir (604) une entrée manuelle du joueur à partir d'un contrôleur actionné manuellement par le joueur;
afficher un jeu d'ordinateur comprenant au moins deux objets sur un affichage étant vu par le au moins un joueur;
commander (608) l'affichage de l'un des objets du jeu d'ordinateur sur la base du geste reconnu et commander l'affichage de l'autre objet du jeu d'ordinateur sur la base de l'entrée manuelle du contrôleur;
dans lequel les étapes reconnaître le geste et recevoir (604) une entrée manuelle se déroulent substantiellement simultanément.

2. Procédé tel que revendiqué dans la revendication 1, dans lequel afficher le jeu d'ordinateur comprend afficher (700) un avatar, comme l'un des au moins deux objets, dans un environnement comprenant au moins un objet d'arrière-plan, étant l'autre objet, et dans lequel commander l'affichage du jeu d'ordinateur comprend utiliser le geste reconnu pour contrôler l'objet d'arrière-plan.

3. Procédé tel que revendiqué dans l'une quelconque des revendications précédentes, dans lequel commander l'affichage de l'objet d'arrière-plan est réalisé sans modèle physique associé.

4. Procédé tel que revendiqué dans l'une quelconque des revendications précédentes, comprenant stocker les détails de gestes spécifiés à utiliser lors de la reconnaissance du geste et dans lequel les gestes spécifiés peuvent être exécutés par un joueur en même temps que la saisie de l'entrée manuelle sur un contrôleur actionné manuellement.

5. Procédé selon l'une quelconque des revendications précédentes, dans lequel commander l'affichage de l'objet d'arrière-plan en utilisant le geste reconnu n'est possible qu'à des moments scénarisés du jeu ou lors d'une entrée manuelle du joueur.

6. Procédé tel que revendiqué dans l'une quelconque des revendications précédentes, dans lequel afficher le jeu d'ordinateur comprend afficher (700) un avatar comme l'un des objets dans un environnement et dans lequel contrôler l'affichage du jeu d'ordinateur comprend commander (704) l'avatar en utilisant l'entrée manuelle du contrôleur et commander l'autre objet dans l'environnement en utilisant le geste reconnu.

7. Procédé tel que revendiqué dans l'une quelconque des revendications précédentes dans lequel reconnaitre le geste comprend détecter une tête du joueur et suivre le mouvement de la tête dans le flux d'images.

8. Procédé tel que revendiqué dans l'une quelconque des revendications précédentes, comprenant diviser chaque image du flux d'images en quatre quadrants et reconnaitre une rotation de tête lorsque la tête est détectée dans chacun des quatre quadrants à tour de rôle.

9. Système de jeu d'ordinateur comprenant:
un dispositif de capture d'images (106) agencé pour recevoir un flux d'images représentant au moins un joueur d'un jeu;
un moteur de reconnaissance de gestes (216) agencé pour reconnaître un geste du joueur en analysant le flux d'images pour détecter et suivre les parties du corps du joueur;
une entrée (904) agencée pour recevoir l'entrée manuelle du joueur à partir d'un contrôleur actionné manuellement (110);
une sortie (906) agencée pour afficher un jeu d'ordinateur comprenant au moins deux objets sur un affichage étant vu par le au moins un joueur;
un processeur (902) agencé pour commander l'affichage de l'un des objets du jeu
d'ordinateur sur la base du geste reconnu et commander l'affichage de l'autre objet du jeu d'ordinateur sur la base de l'entrée manuelle du contrôleur, dans lequel les étapes reconnaître le geste et recevoir une entrée manuelle se déroulent substantiellement simultanément.

10. Programme d'ordinateur agencé pour exécuter les étapes selon l'une quelconque des revendications 1 à 8 lorsqu'exécuté sur un ordinateur.
